Europäisches Patentamt

European Patent Office

Office européen des brevets

(11) Veröffentlichungsnummer: **0 461 736 A2**

(12) **EUROPÄISCHE PATENTANMELDUNG**

(21) Anmeldenummer: 91250132.7

(51) Int. Cl.5: **F16K 31/06**

(22) Anmeldetag: 13.05.91

(30) Priorität: 15.06.90 DE 4019073

(43) Veröffentlichungstag der Anmeldung:
18.12.91 Patentblatt 91/51

(84) Benannte Vertragsstaaten:
AT CH DE FR GB IT LI NL SE

(71) Anmelder: MANNESMANN Aktiengesellschaft
Mannesmannufer 2
W-4000 Düsseldorf 1(DE)

(72) Erfinder: Göttling, Helmut
Fuhrenkamp 3
W-3004 Isernhagen 4(DE)

(72) Erfinder: Möller, Rudolf
Knülweg 15c
W-3007 Gehrden 1(DE)
Erfinder: Mauentöbben, Reinhard
Feurbachstrasse 14
W-3000 Hannover 51(DE)
Erfinder: Scharnowski, Gerhard
Im vogelsang 12
W-3007 Gehrden 1(DE)

(74) Vertreter: Meissner, Peter E., Dipl.-Ing. et al
Patentanwaltsbüro Meissner & Meissner,
Herbertstrasse 22
W-1000 Berlin 33(DE)

(54) **Ventileinrichtung.**

(57) Die Erfindung betrifft eine Ventileinrichtung, welche zwei an einem Stößel (5) hintereinander liegend angeordnete Ventilkörper (36, 2 und 37, 32) enthält. Der erste Ventilkörper (36, 2) bildet mit einem ersten Ventilsitz (3) ein erstes Ventil (3, 36, 2), und der zweite Ventilkörper (37, 32) bildet zusammen mit einem zweiten Ventilsitz (33) ein zweites Ventil (33, 37, 32)

Da es bei zwei starr miteinander verbundenen Ventilkörpern nicht auszuschließen ist, daß z. B. durch Fertigungstoleranzen bedingt, einer der beiden Ventilkörper (36, 2 bzw. 37, 32) bei einem Schließvorgang der beiden Ventile (3, 36, 2 bzw. 33, 37, 32) nicht exakt auf seinem zugehörigen Ventilsitz (3 bzw. 33) aufsitzt, so daß es zu Leckagen kommen kann, ist erfindungsgemäß wenigstens einer der beiden Ventilsitze (3 bzw. 33) oder auch wenigstens einer der beiden Ventilkörper (36, 2 bzw. 37, 32) in Richtung der Längsachse des Stößels (5) gegenüber entweder dem jeweils anderen Ventilsitz (33 bzw. 3) oder auch gegenüber dem jeweils anderen Ventilkörper (37, 32 bzw. 36, 2) im Sinne einer Abstandsänderung zwischen den beiden Ventilsitzen (3 und 33) bzw. im Sinne einer Abstandsänderung zwischen den beiden Ventilkörpern (36, 2 bzw. 37, 32) verstellbar.

Fig.1

EP 0 461 736 A2

Die Erfindung betrifft eine Ventileinrichtung, insbesondere ein proportional wirkendes Elektromagnetventil, gemäß dem Oberbegriff der Patentansprüche 1, 2 und 3.

Aus der DE-PS 29 34 181 ist eine derartige Ventileinrichtung bekannt.

Bei dieser bekannten Ventileinrichtung sind in einem Ventilgehäuse ein erster Ventilsitz, der mit einem ersten Ventilkörper ein erstes Ventil bildet, und ein zweiter Ventilsitz, der mit einem zweiten Ventilkörper ein zweites Ventil bildet, koaxial zueinander hintereinander angeordnet. Der erste Ventilkörper und der zweite Ventilkörper sind an einem zur gemeinsamen Betätigung beider Ventile dienenden Stößel angeordnet.

Es sind eine dem ersten Ventil zugeordnete erste Druckmitteleingangskammer und eine dem zweiten Ventil zugeordnete zweite Druckmitteleingangskammer sowie eine Druckmittelausgangskammer vorgesehen, welche über das erste Ventil und das zweite Ventil gleichzeitig mit der ersten Druckmitteleingangskammer und der zweiten Druckmitteleingangskammer verbindbar bzw. gegen diese absperrbar ist.

Durch die Anordnung von zwei Druckmitteleingangskammern, die über die beiden Ventile gleichzeitig mit der Druckmittelausgangskammer verbindbar sind, ist es möglich geworden, bei geringen Hüben der Ventilkörper große Durchlaßquerschnitte freigeben zu können.

Von Nachteil ist bei der bekannten Anordnung von zwei starr miteinander verbundenen Ventilkörpern, daß es nicht auszuschließen ist, daß zum Beispiel durch Fertigungstoleranzen bedingt, einer der beiden Ventilkörper bei einem Schließvorgang der beiden Ventile nicht exakt auf seinem zugehörigen Ventilsitz aufsitzt, so daß es zu Leckagen kommen kann.

Der Erfindung liegt deshalb die Aufgabe zugrunde, eine Ventileinrichtung der eingangs erwähnten Art zu schaffen, bei welcher sichergestellt ist, daß bei einem Schließvorgang der beiden Ventile beide Ventilkörper exakt und spaltfrei auf ihrem zugehörigen Ventilsitz aufsitzen.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, durch die Veränderbarkeit des Abstandes zwischen den Ventilsitzen der beiden Ventile oder auch zwischen den beiden Ventilkörpern einen spaltfreien Sitz der Ventilkörper auf ihren zugeordneten Ventilsitzen sicherzustellen.

Gemäß einer vorteilhaften Weiterbildung der erfindungsgemäßen Ventileinrichtung ist der die Ventilkörper tragende Stößel an seinen beiden einander abgewandten Seiten im Gehäuse oder auch in Teilen des Gehäuses geführt.

Anhand der Zeichnung werden nachfolgend zwei Ausführungsbeispiele der Erfindung näher erläutert.

Es zeigen:

Fig. 1      eine als Proportionalmagnetventil ausgebildete Ventileinrichtung, bei welcher der eine der beiden Ventilsitze in Richtung des die Ventilkörper tragenden Stößels verstellbar ist und

Figur 2      eine der in Figur 1 gezeigten Ventileinrichtung im wesentlichen gleiche Ventileinrichtung, bei welcher jedoch der die beiden Ventilkörper tragende Stößel im Bereich zwischen den beiden Ventilkörpern geteilt ausgebildet und die beiden Teile des Stößels mittels einer Mutter miteinander verbunden sind.

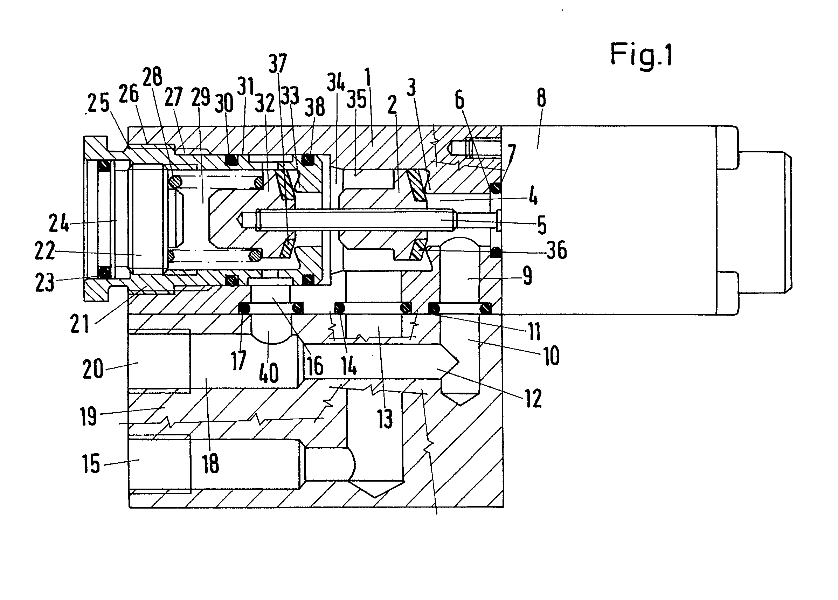

In Figur 1 ist ein Ventilgehäuse 1 dargestellt, welches eine in Richtung seiner Längsachse verlaufende abgestufte Gehäuseausnehmung (27, 31, 35) aufweist. Eine leicht schräg zur Längsachse des Ventilgehäuses verlaufende und sich in Richtung auf das Innere der Gehäuseausnehmung (27, 31, 35) zu erstreckende Abstufung der Gehäuseausnehmung (27, 31, 35) ist als ein erster gehäusefester Ventilsitz (3) ausgebildet, der mit einem ersten Ventilkörper (36, 2) ein erstes Ventil (3, 36, 2) bildet. Der erste Ventilkörper (36, 2) setzt sich aus einem z. B. metallischen Träger (2) und einem an diesem angeordneten elastischen Dichtelement (36) zusammen.

In den den größeren Durchmesser aufweisenden Bereich (27, 31) der Gehäuseausnehmung (27, 31, 35) ist ein als ein rohrförmiger Körper (21) ausgebildeter Gehäuseeinsatz eingesetzt, der mittels eines auf dem Umfang des rohrförmigen Körpers (21) angeordneten Außengewindes (26) und eines am freien Endbereich der Gehäuseausnehmung (27, 31, 35) vorgesehenen Innengewindes (25) nach Art einer Schraubverbindung mit dem Ventilgehäuse (1) verbunden ist.

Der rohrförmige Körper (21) weist an seinem dem aus der Gehäuseausnehmung (27, 31, 35) herausragenden Ende gegenüberliegenden Ende einen leicht schräg zur Längsachse des Ventilgehäuses (1) verlaufenden und sich in Richtung auf das Innere der Gehäuseausnehmung (27, 31, 35) zu erstreckenden Vorsprung auf, der als ein zweiter Ventilsitz (33) ausgebildet ist. Der zweite Ventilsitz (33) bildet zusammen mit einem Ventilkörper (37, 32) ein zweites Ventil (33, 37, 32). Der zweite Ventilkörper (37, 32) besteht ebenfalls aus einem z. B. aus Metall gefertigten Träger (32) und einem auf diesem angeordneten elastischen Dichtelement (37).

Der erste Ventilkörper (36, 2) und der zweite Ventilkörper (37; 32) sind mittels eines als Betätigungsmittel für die beiden Ventile (3, 36, 2) und (33, 37, 32) dienenden Stößels (5) starr miteinander verbunden. Der erste Ventilsitz (3) und der zweite Ventilsitz (33) sowie der erste Ventilkörper (36, 2) und der zweite Ventilkörper (37, 32) sind koaxial zueinander hintereinander angeordnet.

Der rohrförmige Körper (21) ist mittels auf dem Umfang des rohrförmigen Körpers angeordneten Dichtelementen (30, 38) gegen die die Gehäuseausnehmung (27, 31, 35) begrenzende Wand abgedichtet.

In den freien Endbereich des rohrförmigen Körpers (21) ist ein Verschlußteil (24) eingeschraubt, welches einen sich in Richtung auf den zweiten Ventilkörper (37, 32) zu erstreckenden Fortsatz (22) aufweist. Das Verschlußteil (24) weist auf seinem Umfang einen Dichtring (23) auf, welcher dichtend an der Innenwand des rohrförmigen Körpers (21) anliegt. Eine als Regelfeder dienende Feder (28) stützt sich an dem Fortsatz (22) des Verschlußteiles (24) ab und beaufschlagt den zweiten Ventilkörper (37, 32) und somit auch indirekt den ersten Ventilkörper (36, 2), der ja über den Stößel (5) mit dem zweiten Ventilkörper (37, 32) starr verbunden ist, in Schließrichtung des zweiten Ventils (33, 37, 32) und des ersten Ventils (3, 36, 2).

Auf der dem zweiten Ventilkörper (37, 32) abgewandten Seite des ersten Ventilkörpers (36, 2) ist eine erste Druckmitteleingangskammer (4) und auf der dem ersten Ventilkörper (36, 2) abgewandten Seite des zweiten Ventilkörpers (37, 32) ist eine zweite Druckmitteleingangskammer (29) vorgesehen. Zwischen dem ersten Ventil (3, 36, 2) und dem zweiten Ventil (33, 37, 32) ist eine Druckmittelausgangskammer (34) angeordnet, die bei der zwangsläufig gleichzeitigen Betätigung des ersten Ventils (3, 36, 2) und des zweiten Ventils (33, 37, 32) in Öffnungsrichtung mit der ersten Druckmitteleingangskammer (4) und mit der zweiten Druckmitteleingangskammer (29) verbindbar ist.

Der erste Ventilsitz (3) und der zweite Ventilsitz (33) sind, wie bereits erwähnt, koaxial zueinander hintereinander liegend angeordnet.

Die erste Druckmitteleingangskammer (4) weist einen Druckmittelanschluß (9) und die zweite Druckmitteleingangskammer (29) weist einen Druckmittelanschluß (16) auf. Die Druckmittelausgangskammer (34) ist über einen Druckmittelausgang (13) unter Zwischenschaltung eines Dichtringes (14) über einen in einem Gehäusedeckel (19) angeordneten Kanal (15) und eine an diesen anschließende nicht dargestellte Druckmittelleitung mit einem nicht gezeigten Verbraucher verbunden. Der Druckmittelanschluß (9) der ersten Druckmitteleingangskammer (4) und der Druckmittelanschluß (16) der zweiten Druckmitteleingangskammer (29) sind über in dem Gehäusedeckel (19) angeordnete Druckmittelkanäle (18, 12, 10, 40) und einen mit diesen Kanälen verbundenen Druckmittelanschluß (20) mit einer nicht dargestellten Druckmittelquelle verbundenen bzw. verbindbar.

Der Gehäusedeckel (19) ist mittels nicht dargestellter Schrauben mit dem Ventilgehäuse (1) verschraubt. Die im Ventilgehäuse (1) vorgesehenen Druckmittelanschlüsse (9) und (16) sind unter Zwischenschaltung von Dichtringen (11) und (17) so mit den im Gehäusedeckel (19) vorgesehenen Kanälen (10) und (40) verbunden, daß durch einen möglichen Spalt zwischen der Wandung des Ventilgehäuses (1) und der Wandung des Gehäusedeckels (19) kein Druckmittel zur Atmosphäre hin austreten kann.

Der Gehäusedeckel (19) ist nicht an einer Stirnseite des Ventilgehäuses (1) sondern parallel zur Längsachse des Ventilgehäuses (1) verlaufend an diesem angeordnet.

An der dem Verschlußteil (24) des rohrförmigen Körpers abgewandten Stirnseite des Ventilgehäuses (1) ist ein als Proportionalmagnet ausgebildeter Elektromagnet (8) mittels Schrauben befestigt.

Ein hier nicht dargestellter Anker des Elektromagneten (8) ist koaxial zu dem die beiden Ventilkörper (36, 2) und (37, 32) tragenden Stößel (5) angeordnet und mit diesem verbunden.

Ein Dichtring (7), der auf einer dem Elektromagneten (8) zugewandten Stufe (6), welche die Gehäuseausnehmung (27, 31, 35) begrenzt, aufliegt, dichtet den Elektromagneten (8) gegen den Gehäuseinnenraum des Ventilgehäuses (1) sowie einen möglichen Spalt zwischen dem Ventilgehäuse (1) und dem Gehäuse des Elektromagneten (8) ab.

Die Funktion der im vorstehenden beschriebenen Ventileinrichtung wird nachstehend näher erläutert.

Im Normalbetrieb steht über die im Gehäusedeckel (19) vorgesehenen Druckmittelkanäle (18, 40, 12, 10) und die mit diesen verbundenen Druckmittelanschlüsse (9) und (16) Druckmittel aus der Druckmittelquelle in der ersten Druckmitteleingangskammer (4) und in der zweiten Druckmitteleingangskammer (29) an. Das erste Ventil (3, 36, 2) und das zweite Ventil (33, 37, 32) befinden sich in der Schließstellung.

Wird auf den Elektromagneten (8) eine vorbestimmbare Spannung oder auch ein vorbestimmbarer Strom gegeben, so bewegt sich der nicht dargestellte Anker und der mit diesem verbundene, die Ventilkörper (36, 2) und (37, 32) tragende Stößel (5) gegen die Kraft der Regelfeder (28) in Öffnungsrichtung des ersten Ventils (3, 36, 2) und des zweiten Ventils (33, 37, 32).

Die in Abhängigkeit von der Kraft der Regelfeder und in Abhängigkeit der auf den Elektromagneten (8) gegebenen Spannung bzw. des auf den Elektromagneten (8) gegebenen Stromes gelangen das erste Ventil (3, 36, 2) und das zweite Ventil (33, 37, 32) in die Offenstellung. Der Durchlaßquerschnitt der beiden Ventile (3, 36, 2) und (33, 37, 32) ist von den vorstehenden Bedingungen abhängig.

Von der ersten Druckmitteleingangskammer (4) und der zweiten Druckmitteleingangskammer (29) strömt durch die jetzt geöffneten Ventile (3, 36, 2) und (33, 37, 32) Druckmittel in die Druckmittelausgangskammer (34) und von dieser über den Druckmittelausgang (13) sowie den Kanal (15) zu einem nicht dargestellten Verbraucher hin.

Wird die Spannung oder wird der Strom wieder vom Elektromagneten (8) weggenommen, so gelangen die beiden Ventile (3, 36, 2) und (33, 37, 32) vermittels der Kraft der Regelfeder (28) wieder in die Schließstellung. Die Druckmittelausgangskammer (34) ist jetzt gegen die erste Druckmitteleingangskammer (4) und die zweite Druckmitteleingangskammer (29) abgesperrt.

Mittels des Verschlußteiles (24) und des an diesem angeordneten Fortsatz (22) läßt sich die Vorspannung der Regelfeder (28) einstellen.

Stellt sich heraus, daß bei geschlossenen Ventilen der erste Ventilkörper (36, 2) oder auch der zweite Ventilkörper (37, 32) nicht spaltfrei auf seinem zugehörigen Sitz (3) bzw. (33) aufsitzt, so daß trotz der beiden sich in der Schließstellung befindlichen Ventile (3, 36, 2) und (33, 37, 32) Druckmittel aus dem Druckmittelausgang (13) der Ventileinrichtung austritt, so wird der den zweiten Ventilsitz (33) tragende rohrförmige Körper (21) um seine Längsachse so weit verdreht, bis zwischen dem ersten Ventilsitz (3) und dem zweiten Ventilsitz (33) ein Abstand hergestellt ist, welcher sicherstellt, daß der erste Ventilkörper (36, 2) auf seinem zugehörigen Ventilsitz (3) und der zweite Ventilkörper (37, 32) auf seinem zugehörigen Ventilsitz (33) spaltfrei aufsitzt.

Die Abstandsänderung des ersten Ventilsitzes (3) und des zweiten Ventilsitzes (33) zueinander erfolgt durch die Verstellbarkeit des zweiten Ventilsitzes (33) in Richtung der Längsachse des Ventilgehäuses (1) bzw. des Stößels (5).

Die Verstellbarkeit des Ventilsitzes (33) wird durch die Schraubverbindung [(Außengewinde 26 am rohrförmigen Körper 21 - Innengewinde an der die Gehäuseausnehmung (27, 31; 35) begrenzenden Innenwand des Ventilgehäuses (1)] zwischen dem rohrförmigen Körper (21) und dem Ventilgehäuse (1) erreicht.

Da der den zweiten Ventilsitz (33) aufweisende rohrförmige Körper (21) mit seinem freien Ende ein Stück aus der Gehäuseausnehmung (27, 31, 35) des Ventilgehäuses (1) herausragt, sind zur Verstellung des zweiten Ventilsitzes (33) keine besonderen Werkzeuge erforderlich.

Selbstverständlich ist auch möglich, anstatt eines rohrförmigen Körpers lediglich einen ringförmigen Körper vorzusehen, der als Ventilsitz ausgebildet ist und direkt in die Gehäuseausnehmung eingeschraubt wird, wobei dann natürlich der überwiegende Teil der die Gehäuseausnehmung begrenzenden Innenwand des Ventilgehäuses (1) mit Innengewinde versehen werden muß.

Des weiteren ist es auch möglich, den ersten Ventilsitz genauso wie den zweiten Ventilsitz auszubilden, wobei in einem solchen Fall natürlich der Bereich des Ventilgehäuses (1), in welchem der erste Ventilsitz liegen soll, ebenfalls so auszubilden ist wie der Bereich, in welchem der zweite Ventilsitz (33) gelagert ist.

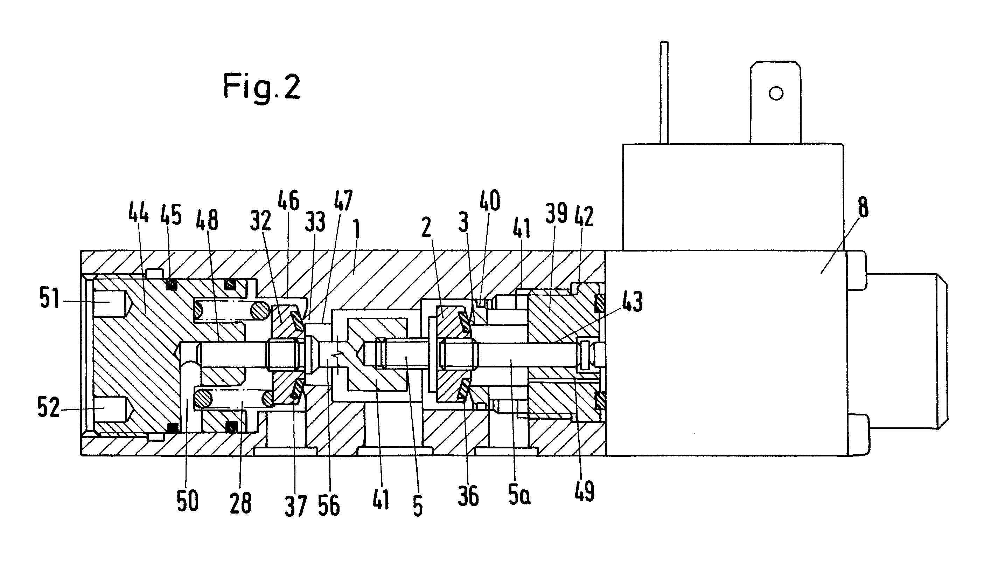

Figur 2 zeigt eine Ventileinrichtung, die im wesentlichen den gleichen Aufbau aufweist wie die Ventileinrichtung gemäß Figur 1. Der Einfachheit halber ist bei diesem Ausführungsbeispiel der die Kanäle aufweisende Gehäusedeckel (19) weggelassen worden.

Da sich in diesem Ausführungsbeispiel im wesentlichen die Verstelleinrichtung für die beiden Ventile von der Verstelleinrichtung gemäß Figur 1 unterscheidet und eine Führung für den Stößel vorgesehen ist, wird hier lediglich auf die spezielle Verstelleinrichtung der Ventile und die Führung für den Stößel eingegangen.

Der besseren Übersicht halber sind die den in Figur 1 gezeigten Bauteilen gleichen Bauteile mit gleichen Bezugsziffern versehen.

In der abgestuften Ausnehmung des Ventilgehäuses (1) sind ein erster Ventilsitz (3) und ein zweiter Ventilsitz (33) hintereinander liegend und koaxial zueinander angeordnet. Der erste Ventilsitz (3) ist an einem Gehäuseeinsatz (39) angeordnet, der auf der dem Elektromagneten (8) zugewandten Seite des Ventilgehäuses (1) in eine abgestufte Ausnehmung (Bohrung) (40, 41, 42) des Ventilgehäuses (1) eingeschraubt ist. Der zweite Ventilsitz (33) ist gehäusefest angeordnet. Ein erster Ventilkörper (36, 2) bildet mit dem ersten Ventilsitz (3) ein erstes Ventil (36, 3, 2) und ein zweiter Ventilkörper (37, 32) bildet zusammen mit dem zweiten Ventilsitz (33) ein zweites Ventil (33, 37, 32).

Der erste Ventilkörper (36, 2) und der zweite Ventilkörper (37, 32) sind mittels eines beide Ventilkörper betätigenden Stößels (5) miteinander verbunden.

Der Stößel (5) ist im Bereich zwischen dem ersten Ventilkörper (36, 2) und dem zweiten Ventilkörper (37, 32) im wesentlichen quer zu seiner Längsachse geteilt ausgebildet. Ein erster Teil (5 a) des Stößels trägt den ersten Ventilkörper (36, 2) und ein zweiter Teil (5 b) des Stößels (5) trägt den zweiten Ventilkörper (37, 32). Sowohl der Teil (5 a) des Stößels (5) als auch der Teil (5 b) des Stößels (5) weisen an ihren einander zugewandten Endbereichen Gewinde auf, das in der Zeichnung nicht näher dargestellt ist.

Die mit Gewinde versehenen Teile der Teile (5 a) und (5 b) des Stößels (5) sind mittels einer als Verbindungsmittel für die beiden Stößelteile dienenden Mutter (41) miteinander verbunden, wobei die Mutter (41) Teil des Stößelteiles (5 b) ist. Durch Verdrehen der Mutter (41) gegenüber dem Stößelteil (5 a) um ihre Längsachse oder auch durch Verdrehen wenigstens eines der beiden Stößelteile (5 a) bzw. (5 b) um seine Längsachse läßt sich der Abstand zwischen dem ersten Ventilkörper (36, 2) und dem zweiten Ventilkörper (37, 32) verändern.

Es ist auch möglich, auf eine Teilung des Stößels (5) zu verzichten und lediglich wenigstens den einen der beiden Ventilkörper (36, 2) bzw. (37, 32) auf den Stößel (5) aufzuschrauben. Durch Verdrehen wenigstens einer der Ventilkörper (36, 2) bzw. (37, 32) um seine Längsachse läßt sich der Abstand zwischen den beiden Ventilkörpern (36, 2) und (37, 32) aufgrund der Steigung des Gewindes verändern.

Bei all diesen Ausführungsmöglichkeiten wird der gleiche Effekt erzielt, nämlich, daß durch die Verstellbarkeit wenigstens eines der beiden Ventilsitze (3) bzw. (33) gegenüber dem jeweils anderen Ventilsitz (33) bzw. (3) oder die Verstellbarkeit wenigstens eines der beiden Ventilkörper (36, 2) bzw. (37, 32) gegenüber dem jeweils anderen Ventilkörper (37, 32) bzw. (36, 2) in Richtung der Längsachse des Stößels im Sinne einer Abstandsänderung zwischen den beiden Ventilsitzen (3) und (33) bzw. zwischen den beiden Ventilkörpern (37, 32) und (36, 2) sich jeder der beiden Ventilkörper (36, 2) und (37, 32) spaltfrei an seinem zugehörigen Ventilsitz (3) bzw. (33) zur Anlage bringen läßt.

Um den spaltfreien Sitz der Ventilkörper auf ihren zugehörigen Ventilsitzen noch zu verbessern, ist das Stößelteil (5 a) mit seinem freien Ende in einem als Führung für den Stößel (5) dienenden Durchlaß (43) des Gehäuseeinsatzes (39) in Richtung seiner Längsachse verschiebbar gelagert.

Für den gleichen Zweck ist in einem weiteren Gehäuseeinsatz oder auch Verschlußteil (44), welcher bzw. welches eine abgestufte Gehäusebohrung (45, 46, 47) des Ventilgehäuses (1) verschließt, eine als Führung für den Stößel (5) dienende Ausnehmung (48) vorgesehen, in welcher das Teil (5 b) des Stößels (5) in Richtung seiner Längsachse verschiebbar gelagert ist. Dieser Gehäuseeinsatz bzw. dieses Verschlußteil (44) ist auf der dem anderen Gehäuseeinsatz (39) gegenüberliegenden Seite des Ventilgehäuses (1) gelegen.

Zur Verhinderung von Staudruckbildung in den Endbereichen der den Stößel (5) aufnehmenden Führungen (43) und (48) sind in den Gehäuseeinsätzen (39) und (44) Kanäle (49) und (50) vorgesehen. In dem Gehäuseeinsatz (44), an dem sich die Feder (28) abstützt, sind Ausnehmungen (51) und (52) zum Einführen eines Werkzeugs vorgesehen, mittels welchem der mit Außengewinde versehene Gehäuseeinsatz (44) um seine Längsachse verdrehbar ist, um so den Gehäuseeinsatz (44) zwecks Verstellens der Kraft der Feder (28) in Richtung seiner Längsachse verstellen zu können.

Der Stößel (5) kann selbstverständlich auch in wenigstens einem gehäusefesten Teil geführt sein. Die Führung für den Stößel (5) ist selbstverständlich auch in einer Ventileinrichtung anwendbar, deren Stößel nicht geteilt ausgebildet ist.

## Patentansprüche

1. Ventileinrichtung, insbesondere ein proportional wirkendes Elektromagnetventil, mit folgenden Merkmalen:

   a) In einem Ventilgehäuse (1) sind ein erster Ventilsitz (3), der mit einem ersten Ventilkörper (36, 2) ein erstes Ventil (3, 36, 2) bildet und ein zweiter Ventilsitz (33), der mit einem zweiten Ventilkörper (37, 32) ein zweites Ventil (33, 37, 32) bildet, koaxial zueinander hintereinander angeordnet;

   b) der erste Ventilkörper (36, 2) und der zweite Ventilkörper (37, 32) sind an einem zur gemeinsamen Betätigung beider Ventile (3, 36, 2) und (33, 37, 32) dienenden Stößel (5) angeordnet;

   c) es sind eine dem ersten Ventil (3, 36, 2) zugeordnete erste Druckmitteleingangskammer (4) und eine dem zweiten Ventil (33, 37, 32) zugeordnete zweite Druckmitteleingangskammer (29) vorgesehen;

   d) es ist eine Druckmittelausgangskammer (34) vorgesehen, die über das erste Ventil (3, 36, 2) und das zweite Ventil (33, 37, 32) gleichzeitig mit der ersten Druckmitteleingangskammer (4) und mit der zweiten Druckmitteleingangskammer (29) verbindbar bzw. gegen diese absperrbar ist;

   dadurch gekennzeichnet,

   daß wenigstens einer der beiden Ventilsitze (3 bzw. 33) in Richtung der Längsachse des Stößels (5) gegenüber dem jeweils anderen Ventilsitz (33) bzw. (3) im Sinne einer Abstandsänderung zwischen den beiden Ventilsitzen (3) und (33) verstellbar ist.

2. Ventileinrichtung, insbesondere ein proportional wirkendes Elektromagnetventil, mit folgenden Merkmalen:

   a) In einem Ventilgehäuse (1) sind ein erster Ventilsitz (3), der mit einem ersten Ventilkörper (36, 2) ein erstes Ventil (3, 36, 2) bildet und ein zweiter Ventilsitz (33), der mit einem zweiten Ventilkörper (37, 32) ein zweites Ventil (33, 37, 32) bildet, koaxial zueinander hintereinander angeordnet;

b) der erste Ventilkörper (36, 2) und der zweite Ventilkörper (37, 32) sind an einem zur gemeinsamen Betätigung beider Ventile (3, 36, 2) und (33, 37, 32) dienenden Stößel (5) angeordnet;

c) es sind eine dem ersten Ventil (3, 36, 2) zugeordnete erste Druckmitteleingangskammer (4) und eine dem zweiten Ventil (33, 37, 32) zugeordnete zweite Druckmitteleingangskammer (29) vorgesehen;

d) es ist eine Druckmittelausgangskammer (34) vorgesehen, die über das erste Ventil (3, 36, 2) und über das zweite Ventil (33, 37, 32) gleichzeitig mit der ersten Druckmitteleingangskammer (4) und mit der zweiten Druckmitteleingangskammer (29) verbindbar bzw. gegen diese absperrbar ist;

dadurch gekennzeichnet,

daß wenigstens einer der beiden Ventilkörper (36, 2 bzw. 37, 32) in Richtung der Längsachse des Stößels (5) gegenüber dem jeweils anderen Ventilkörper (37, 32 bzw. 36, 2) im Sinne einer Abstandsänderung zwischen den beiden Ventilkörpern (37, 32) bzw. (36, 2) verstellbar ist.

3. Ventileinrichtung, insbesondere ein proportional wirkendes Elektromagnetventil, mit folgenden Merkmalen:

a) In einem Ventilgehäuse (1) sind ein erster Ventilsitz (3), der mit einem ersten Ventilkörper (36, 2) ein erstes Ventil (3, 36, 2) bildet und ein zweiter Ventilsitz (33), der mit einem zweiten Ventilkörper (37, 32) ein zweites Ventil (33, 37, 32) bildet, koaxial zueinander hintereinander angeordnet;

b) der erste Ventilkörper (36, 2) und der zweite Ventilkörper (37, 32) sind an einem zur gemeinsamen Betätigung beider Ventile (3, 36, 2 bzw. 33, 37, 32) dienenden Stößel (5) angeordnet;

c) es sind eine dem ersten Ventil (3, 36, 2) zugeordnete erste Druckmitteleingangskammer (4) und eine dem zweiten Ventil (33, 37, 32) zugeordnete zweite Druckmitteleingangskammer (29) vorgesehen;

d) es ist eine Druckmittelausgangskammer (34) vorgesehen, die über das erste Ventil (3, 36, 2) und über das zweite Ventil (33, 37, 32) gleichzeitig mit der ersten Druckmitteleingangskammer (4) und mit der zweiten Druckmitteleingangskammer (29) verbindbar bzw. gegen diese absperrbar ist;

gekennzeichnet durch die folgenden Merkmale:

a) der Stößel (5) ist im Bereich zwischen dem ersten Ventilkörper (36, 2) und dem zweiten Ventilkörper (37, 32) in ein Teil (5 a) und ein Teil (5 b) geteilt ausgebildet;

b) es sind Verbindungsmittel für die beiden Teile (5 a und 5 b) vorgesehen;

c) die beiden Teile (5 a und 5 b) sind bei gelöstem Verbindungsmittel in Richtung ihrer Längsachse relative zueinander bewegbar im Sinne einer Abstandsänderung zwischen den beiden Ventilkörpern (36, 2 und 37, 32).

4. Ventileinrichtung nach Anspruch 3, gekennzeichnet durch die folgenden Merkmale:

a) Als Verbindungsmittel für die beiden Teile (5 a und 5 b) des Stößels (5) dient eine Mutter (41);

b) die einander zugewandten Endbereiche der beiden Teile (5 a und 5 b) des Stößels (5) weisen Gewinde auf.

5. Ventileinrichtung nach wenigstens einem der vorhergehenden Ansprüche 1 bis 3, dadurch gekennzeichnet, daß zum Antreiben des Stößels (5) ein Elektromagnet (8) dient, der mit dem Stößel (5) in Wirkverbindung steht.

6. Ventileinrichtung nach Anspruch 5, dadurch gekennzeichnet, daß der Elektromagnet (8) als Proportionalmagnet ausgebildet ist.

7. Ventileinrichtung nach wenigstens einem der vorhergehenden Ansprüche 5 und 6, dadurch gekennzeichnet, daß der Stößel (5) oder ein mit dem Stößel (5) verbundenes Teil von einer Feder (28) entgegen der vom Elektromagneten (8) auf den Stößel (5) ausgeübten Kraft beaufschlagt wird.

8. Ventileinrichtung nach Anspruch 7, dadurch gekennzeichnet, daß die Feder (28) als Regelfeder ausgebildet ist.

9. Ventileinrichtung nach Anspruch 1, dadurch gekennzeichnet, daß wenigstens einer der beiden Ventilsitze (3 bzw. 33) an einem Gehäuseeinsatz (21) angeordnet ist, der in einer in Richtung der Längsachse des Stößels (5) vorgesehenen Gehäuseausnehmung (27, 31) lösbar und in Richtung seiner Längsachse verstellbar in der Gehäuseausnehmung (27, 31) befestigt ist.

10. Ventileinrichtung nach Anspruch 9, dadurch gekennzeichnet, daß zur lösbaren und verstellbaren Befestigung des Gehäuseeinsatzes (21) ein am Gehäuseeinsatz (21) angeordnetes Außengewinde (26) und ein mit diesem zusammenwirkendes, in der die Gehäuseausnehmung (27, 31) begrenzenden Wandung vorgesehenens Innengewinde (25) dient.

11. Ventileinrichtung nach wenigstens einem der vorhergehenden Ansprüche, dadurch gekennzeichnet, daß wenigstens einer der beiden Ventilkörper (36, 2 bzw. 37, 32) auf den Stößel (5) aufgeschraubt ist.

12. Ventileinrichtung nach wenigstens einem der vorhergehenden Ansprüche, dadurch gekennzeichnet, daß der Stößel (5) mit wenigstens einem seiner freien Endbereiche in einer als Führung für den Stößel (5) dienenden Ausnehmung (48) bzw. in einem Durchlaß (32) eines Teiles (44 bzw. 39) des Ventilgehäuses (1) in Richtung seiner Längsachse geführt ist.

13. Ventileinrichtung nach Anspruch 12, dadurch gekennzeichnet, daß die Führung (48 bzw. 43) für den Stößel (5) in einem Verschlußteil bzw. in einem Gehäuseeinsatz (44 bzw. 39) des Ventilgehäuses (1) angeordnet ist.

Fig.1

Fig.2

EP 0 461 736 A2